# EUROPÄISCHE PATENTSCHRIFT

(11) **EP 0 499 908 B1**
(45) Veröffentlichungstag und Bekanntmachung des Hinweises auf die Patenterteilung: **06.09.1995**
(21) Anmeldenummer: 92102113.5
(22) Anmeldetag: 08.02.1992
(51) Int. Cl.: B62D 53/08

(54) **Sicherung für ein Kupplungsteil eines freistehenden Sattelaufliegers für Zugfahrzeuge**
Anti-coupling device for the king pin of a semi-trailer coupling
Dispositif antivol pour la cheville ouvrière de l'attelage d'une semi-remorque

(30) Priorität: 16.02.1991 DE 4104796
(43) Veröffentlichungstag der Anmeldung: 26.08.1992
(73) Patentinhaber: DIEHL GMBH & CO., 90478 Nürnberg (DE)
(72) Erfinder: de Keijzer, Cornelius Jakobus, NL-5802 EX Venray (NL)

(56) Entgegenhaltungen:
- AU-A- 563 578
- GB-A- 1 572 792
- US-A- 2 706 392
- US-A- 3 798 938
- US-A- 4 697 444
- US-A- 4 704 883

## Beschreibung

Die Erfindung bezieht sich auf eine Sicherung für einen Königszapfen eines freistehenden Sattelaufliegers für Zugfahrzeuge nach dem Oberbegriff des Anspruches 1.

Aus dem DE-GM 78 23 082 ist ein verschließbares Schutzgehäuse für Anhänger-Kupplungen bekannt. Dieses verhindert die unbefugte Benutzung der Anhängerkupplung von Anhängern, so daß ein Diebstahl des Anhängers weitgehend ausgeschlossen ist.

Das Schutzgehäuse umfaßt einen Kupplungsschuh einschließlich seiner Befestigungen an einer Zugstange und ist über ein separates Bügelschloß abschließbar.

Bei Sattelaufliegern und Zugfahrzeugen liegt eine Kupplungsvorrichtung vor, die aus einem anhängerseitigen Königszapfen und aus einer zugfahrzeugseitigen Aufliegerplatte mit Fangvorrichtung für den Königszapfen besteht.

Die Gefahr der unbefugten Benutzung bzw. des Diebstahles des geparkten Sattelaufliegers liegt vor, da die genannte Kupplungsvorrichtung weitverbreitet und somit ein Diebstahl oder auch ein Vertauschen des Sattelaufliegers möglich ist.

Ausgehend von dem DE-GM 78 23 082 ist der Schutz des Königszapfens gegen unbefugte Benutzung durch die bekannte Vorrichtung nicht ohne weiteres möglich. Der besondere Nachteil der bekannten Vorrichtung besteht darin, daß das separate Schloß Angriffsmöglichkeiten zu seiner Zerstörung bietet.

Auch die Sicherung gemäß der US-A-4 704 883 bietet nicht den erforderlichen Schutz. Diese Sicherung weist eine beidseitig offene, also rohrförmige Hülse aus Stahl mit einem daran seitlich befestigten Schloß auf, wobei die rohrförmige Hülse nur umfangsseitig mit einem Gummikörper verbunden ist. Das Schloß weist einen Riegelzylinder auf. In Schließstellung des Riegelzylinders blockiert dieser die Sicherung am Königszapfen. Damit ist die Sicherung axial nicht mehr beweglich. Außer dem Riegelzylinder sind keine weiteren axialen Anschläge vorgesehen. Nachdem die Stahlhülse kopfseitig, also an ihrem freien Ende, bündig mit dem Gummikörper abschließt, ist die Sicherung an ihrem freien Ende ohne weiteres zugänglich und daher manipulierbar. Durch Hammerschläge auf die Stahlhülse oder durch eine Drückvorrichtung wird durch die kinematische Kupplung zwischen Stahlhülse und Riegelzylinder der Riegelzylinder beschädigt oder sogar aus seiner Sperrstellung herausgedrückt. Entweder ist das Schloß nicht mehr ordnungsgemäß zu entriegeln oder die Sicherung kann sogar vom Königszapfen abgehebelt werden.

Der Erfindung liegt die Aufgabe zugrunde, den Königszapfen eines Sattelaufliegers gegen eine unbefugte Benutzung zu sichern und diese Sicherung so zu gestalten, daß sie durch Manipulationen, wie Brechwerkzeuge und Schweißgeräte, weitgehend widerstandsfähig ist.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Gemäß der Erfindung liegt ein massives Schloß-System im Zentrum der Sicherung vor.

Die Sicherung bedeckt den größten Teil der freien Oberfläche des Königszapfens, wobei die für die Verriegelung des Königszapfens maßgebenden Metallteile einerseits in Gummi gelagert und andererseits nur sehr schwer für Manipulationen zugänglich sind.

Es liegt daher eine große Schutzwirkung gegen unbefugte Benutzung des Königszapfens bzw. des Sattelaufliegers vor.

Die Sicherung ist für den Fahrer aufgrund ihrer einstückigen Ausführung leicht handhabbar. Damit kann sie schnell sowohl montiert als auch demontiert werden. Es liegen auch keine scharfkantigen Teile vor, die zu Verletzungen führen könnten. Zur Handhabbarkeit trägt auch das geringe Gewicht der Sicherung bei.

Wesentlich ist auch, daß eine Beschädigung am Zugfahrzeug bei Kupplungsmanövern vermieden wird, falls versehentlich das Schloß nicht demontiert ist. Hierbei schützt der ringförmige Gummikörper der Sicherung die Aufliegerplatte.

Eine weitere Verbesserung der Sicherung zum Schutz gegen Manipulationen liegt dadurch vor, daß zum einen die Ansetzmöglichkeiten von Brechwerkzeugen zwischen der Sicherung und der Basis des Königszapfens erschwert ist, andererseits der Königszapfen kopfseitg vollständig von der Sicherung bedeckt ist. Kopfseitig liegt daher eine nahezu geschlossene Gummi-Oberfläche vor, die lediglich das Schloß ausspart. Es bestehen daher so gut wie keine Angriffsmöglichkeiten für Manipulationen. Außerdem ist die Sicherung einschließlich des Schlosses gegen Spritzwasser, also gegen Verschmutzung und Einfrieren des Schlosses geschützt.

Ein rasches Montieren der Sicherung am Königszapfen liegt nach dem Merkmal des Anspruches 3 vor.

Bei einer kopfseitigen Schlagbeanspruchung der Sicherung ist die Sperrwirkung des Schlosses gewährleistet. Die Sicherung ist ohne Beeinträchtigung der sperrenden Funktion des Riegelzylinders aufgrund der Kompressiblilität des Bodens des Gummikörpers axial verschiebbar.

Nach dem Anspruch 2 ist gewährleistet, daß das Schloß sicher gegen Manipulationen in der Sicherung befestigt ist.

Durch den Anspruch 4 liegt der Vorteil vor, daß eine Beschädigung des Schlosses aufgrund des seitlichen Gummischutzes sicher vermieden wird. Diese Beschädigung könnte dann eintreten, wenn das Zugfahrzeug versehentlich mit dem Sattelauflieger gekuppelt werden soll, obwohl die Sicherung an Köngiszapfen befestigt ist.

Ein Ausführungsbeispiel der Erfindung ist in der Zeichnung dargestellt. Es zeigt:
- Figur 1: in schematischer Darstellung ein Zugfahrzeug und einen durch eine Sicherung gesicherten Sattelauflieger,
- Figur 2: Kupplungselemente der Fahrzeuge nach Figur 1, wobei das Kupplungselement des Sattelaufliegers durch eine Sicherung gesichert ist,
- Figur 3: eine Ansicht der Sicherung nach Figur 1 in Pfeilrichtung III,
- Figur 4: einen Schnitt entsprechend der Schnittlinie IV-IV nach Figur 3.

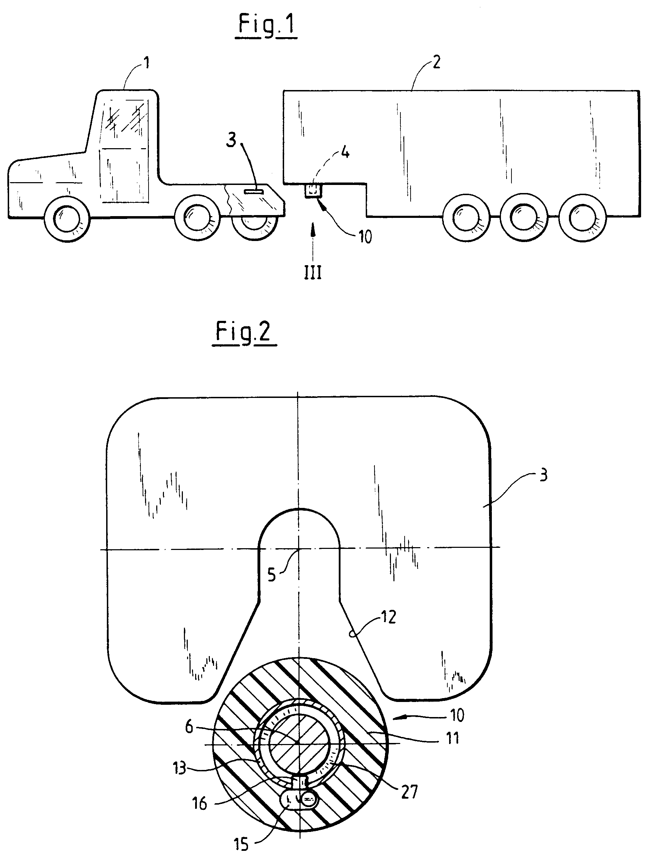

Nach Figur 1 sind ein Zugfahrzeug 1 und ein Sattelauflieger 2 mit vereinfacht dargestellten Kupplungselementen, nämlich einer Aufliegerplatte 3 mit einer nicht dargestellten Fangvorrichtung und einem Königszapfen 4 versehen.

Der Königszapfen 4 ist mit einer Sicherung 5 gemäß Figur 2 verriegelt.

Sind das Zugfahrzeug 1 und der Sattelauflieger 2 miteinander gekuppelt, so decken sich die Achsenkreuze 5, 6 von Aufliegerplatte 3 und Königszapfen 4.

Eine derartige Kupplung ist nach Figur 1 und 2 nicht möglich. Der Königszapfen 4 trägt eine Sicherung 10, die im wesentlichen aus einem ringförmigen Gummikörper 11 besteht.

Bei einem Kupplungsversuch bremst der Gummikörper 11 durch elastische Verformung in einem konischen Einlauf 12 der Aufliegerplatte 3 das Zugfahrzeug 1 ab.

Bei extremer Verformung des Gummikörpers 11 verhindert eine dünnwandige Stahlhülse 13 ein Übereinstimmen der Achsenkreuze 5, 6.

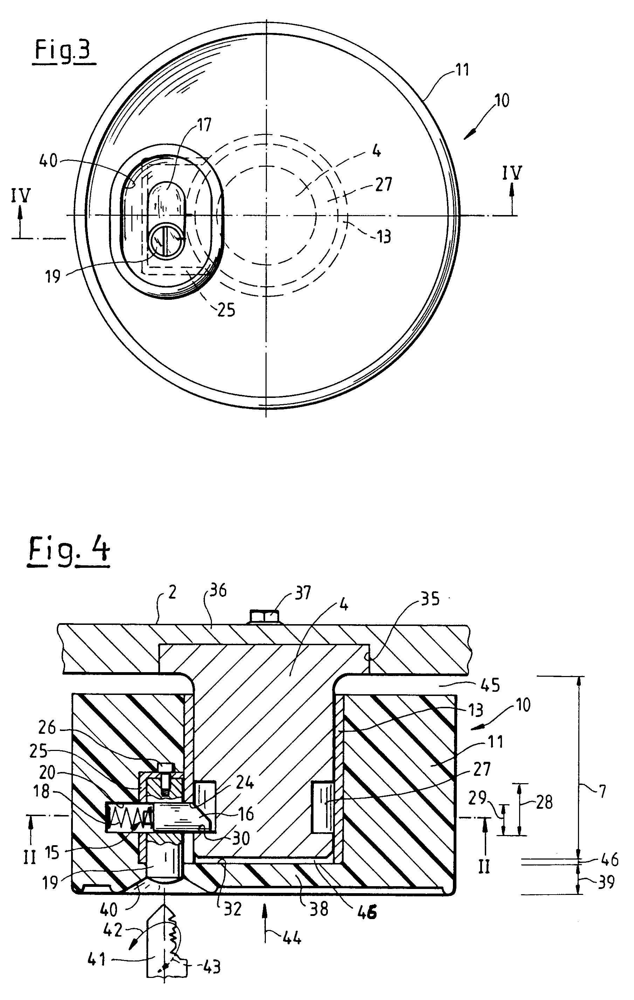

Entsprechend den Figuren 2 bis 4 ist in dem Gummikörper 10 ein Schloß 15, bestehend aus einem Riegelzylinder 16, einem Grundkörper 17, einer Feder 18 und einem Schlüsselzylinder 19 integriert.

Das Schloß 15 sitzt in einem aus Stahlblech bestehenden Schloßkasten 25 und ist mit der Hülse 13 verschweißt. Eine Schraube 26 sichert das Schloß 15 in dem Schloßkasten 25.

Der Gummikörper 11 ist mit der Hülse 13 durch Vulkanisation verbunden.

Die Hülse 13 besitzt für den Riegelzylinder 16 eine entsprechende Öffnung 24, wobei der Riegelzylinder 16 in eine ringförmige Ausnehmung 27 des Königszapfens 4 bzw. in eine Bohrung 20 des Gummikörpers 11 eingreift. Die Ausnehmung 27 besitzt eine Länge 28, die etwa einem doppelten Durchmesser 29 des Riegelzylinders 16 entspricht.

Aufgrund der Schwerkraftwirkung der Sicherung 10 liegt der Riegelzylinder 16 an einer kopfseitigen Flanke 30 der Ausnehmung 27 an.

Die Hülse 13 sitzt in einer sacklochartigen Bohrung 32 des Gummikörpers 11 und umgibt den Königszapfen 4 nahezu vollständig auf seiner ganzen Länge 7.

Der Königszapfen 4 ist in einer Ausnehmung 35 einer Bodenplatte 36 des Sattelaufliegers 2 über eine Schraube 37 befestigt.

Eine Kopfplatte 38 des Gummikörpers 11 besitzt eine Dicke 39, die etwa dem Durchmesser 29 des Riegelzylinders 16 entspricht.

In der Kopfplatte 38 ist im Bereich des Schlosses 15 ein Einführkonus 40 für einen Schlüssel 41 vorgesehen.

Zum Entriegeln der Sicherung ist der Schlüssel 41 in den Schlüsselzylinder 19 einzustecken und in Pfeilrichtung 42 zu bewegen. Ein nicht dargestellter Antriebsmechanismus bewirkt das Rückziehen des Riegelzylinders 16 entgegen der Kraft der Feder 18 aus der Ausnehmung 27 des Königszapfens 4 und ein Eintauchen in die Bohrung 20.

Soll der Königszapfen 4 durch die Sicherung 10 verriegelt werden, so ist der Schlüsselzylinder 19 in Richtung des Pfeiles 43 zu drehen, wodurch der Riegelzylinder 16 in die ringförmige Ausnehmung 27 des Königszapfens 4 eingreift.

Manipulationen, beispielsweise durch Brechstangen, die in einem Spalt 45 zwischen der Bodenplatte 36 des Sattelaufliegers 2 und dem Gummikörper 11 eingesetzt werden, ist eine Wirkung auf die Verriegelung des Schlosses 15 nicht auszuüben, da der Gummikörper 11 sich nahezu beliebig verformen läßt, ohne daß die auf dem Königszapfen 4 mit geringem Spiel sitzende Hülse 13 ihre Position verändert.

Auch Hammerschläge auf die Kopfplatte 38 des Gummikörpers 11 oder auf den Schlüsselzylinder 19 ergeben eine nur geringe axiale Verschiebung der Sicherung 10 in Richtung eines Pfeiles 44, wobei nach Überbrücken der Spalte 45, 46 diese Bewegung durch den Gummikörper 11 bzw. die Bodenplatte 38 abgefedert wird.

## Patentansprüche

1. Sicherung (10) für einen Königszapfen (4) eines freistehenden Sattelaufliegers (2) für Zugfahrzeuge (1) gegen unbefugte Benutzung mit einer, über den Königszapfen (4) schieb- und abschließbaren Gummimetallkörper (11, 13),
wobei die Sicherung (10) aus einer dünnwandigen, aus Stahl bestehenden Hülse (13),
einem mit der Hülse (13) umfangsseitig fest verbundenen, elastischen, ringförmigen Gummikörper (11) und aus einem, im Gummikörper (11) integrierten Schloß (15) besteht,
und ein Riegelzylinder (16) des Schlosses (15) durch eine Öffnung (24) der Hülse (13) in eine ringförmige Ausnehmung (27) des Königszapfens (4) eingreift,
dadurch gekennzeichnet,
daß die Hülse (13) den Königszapfen (4) auf seiner Länge (7) bis auf einen Spalt (45) zwischen der Sicherung (10) und einer Bodenplatte (36) des Sattelaufliegers (2) nahezu vollständig umgibt und der Gummikörper (11) aufgrund einer Kopfplatte (38) eine sacklochartige Bohrung (32) für die darin befestigte Hülse (13) besitzt,
und daß der Riegelzylinder (16) einen Durchmesser (29) aufweist, der wesentlich kleiner ist als die Länge (28) der Ausnehmung (27).

2. Sicherung nach Anspruch 1,
dadurch gekennzeichnet,
daß das Schloß (15) in einem aus Stahl bestehenden, dünnwandigen Schloßkasten (25) befestigt ist und der Schloßkasten (25) in dem Gummikörper (11) integriert und mit der Hülse (13) fest verbunden ist, wobei die Befestigung des Schlosses (15) in dem Schloßkasten (25) bodenseitig durch eine Schraube (26) erfolgt.

3. Sicherung nach Anspruch 1,
dadurch gekennzeichnet,
daß die Länge (28) der ringförmigen Ausnehmung (27) etwa dem doppelten Durchmesser (29) des Riegelzylinders (16) entspricht,
wobei der Riegelzylinder (16) an einer kopfseitigen Flanke (30) der Ausnehmung (27) anliegt und eine Kopfplatte (38) des Gummikörpers (11) etwa eine, dem Durchmesser (29) des Riegelzylinders (16) entsprechende Dicke (39) aufweist.

4. Sicherung nach Anspruch 1,
dadurch gekennzeichnet,
daß in der Kopfplatte (38) im Bereich des Schlosses (15) ein Einführkonus (40) für einen Schlüssel (41) vorgesehen ist.

## Claims

1. Locking device (10) for a king pin (4) of a free-standing semi-trailer (2) for prime movers (1) to protect against unauthorised use, with a rubber-metal body (11, 13), which may slide and close over the king pin (4), said locking device (10) comprising a thin-walled steel sleeve (13), a flexible ring-shaped rubber body (11) firmly connected at its periphery to the sleeve (13) and a lock (15) integrated into the rubber body (11), and wherein a cylinder (16) of the lock (15) engages through an opening (24) in the sleeve (13) into a ring-shaped recess (27) in the king pin (4), characterised in that the sleeve (13) almost completely surrounds the king pin (4) over its length (7) except for a gap (45) between the locking device (10) and a base plate (36) of the semi-trailer (2), and because of a head plate (38), the rubber body (11) has a drilled hole (32) similar to a blind hole for the sleeve (13) fastened therein; and that the diameter (29) of the lock cylinder (16) is substantially smaller than the length (28) of the recess (27).

2. Locking device according to Claim 1, characterised in that the lock (15) is secured in a thin-walled steel lock case (25), and the lock case (25) is integrated into the rubber body (11) and firmly connected to the sleeve (13), the lock (15) being secured on the base side of the lock case (25) by means of a screw (26).

3. Locking device according to Claim 1, characterised in that the length (28) of the ring-shaped recess (27) corresponds to about double the diameter (29) of the lock cylinder (16), in which case said lock cylinder (16) abuts against a flank (30) of the recess (27) on the head side and the thickness (39) of a head plate (38) of the rubber body (11) corresponds to about the diameter (29) of the lock cylinder (16).

4. Locking device according to Claim 1, characterised in that an insert cone (40) is provided for a key (41) in the head plate (38) in the area of the lock (15).

## Revendications

1. Sécurité (10) pour l'axe-pivot (4) d'une semi-remorque (2) indépendante, destinée à des véhicules tracteurs (1), pour empêcher toute utilisation non autorisée, avec un corps métal-caoutchouc (11, 13) pouvant être emboîté et fermé sur l'axe-pivot (4), la sécurité (10) étant constituée d'une douille (13) à paroi mince réalisée en acier, d'un corps en caoutchouc (11) annulaire, élastique, relié rigidement en périphérie à la douille (13) et d'une serrure (13) intégrée dans le corps en caoutchouc (11) et un cylindre de verrouillage (16) de la serrure (15) s'engageant par une ouverture (24) de la douille (13) dans un évidement (27) annulaire de l'axe-pivot (4),
caractérisée en ce que
la douille (13) entoure à peu près complètement l'axe-pivot (4) sur sa longueur (7), jusqu'à ne plus laisser qu'un interstice (45) entre la sécurité (10) et une plaque inférieure (36) de la semi-remorque (2) et le corps en caoutchouc (11) ayant du fait d'une plaque de tête (38) un perçage (32) en trou borgne, pour loger la douille (13) y étant fixée intérieurement, et en ce que le cylindre de verrouillage (16) a un diamètre (29) sensiblement inférieur à la longueur (28) de l'évidement (27).

2. Sécurité selon la revendication 1, caractérisée en ce que la serrure (15) est fixée dans un caisson de serrure (25) à paroi mince, en acier et le caisson de serrure (25) est intégré dans le corps en caoutchouc (11) et relié rigidement à la douille (13), la fixation de la serrure (15) dans le caisson de serrure (25) s'effectuant côté fond, au moyen d'une vis (26).

3. Sécurité selon la revendication 1, caractérisée en ce que la longueur (28) de l'évidement (27) annulaire correspond à peu près à deux fois le diamètre (29) du cylindre de verrouillage (16), le cylindre de verrouillage (16) appuyant sur un flanc (30) situé côté tête de l'évidement (27) et une plaque de tête (38) du corps en caoutchouc (11) ayant une épaisseur (39) correspondant à peu près au diamètre (29) du cylindre de verrouillage (16).

4. Sécurité selon la revendication 1, caractérisée en ce qu'un cône d'introduction (40) destiné à une clef (41) est prévu dans la plaque de tête (38), dans la zone de serrure (15).
